# EUROPÄISCHE PATENTSCHRIFT

(11) **EP 0 775 737 B1**
(45) Veröffentlichungstag und Bekanntmachung des Hinweises auf die Patenterteilung: **19.09.2001**
(21) Anmeldenummer: 96116633.7
(22) Anmeldetag: 17.10.1996
(51) Int. Cl.: C09K 19/00, C09K 19/38, C09D 5/36, C09B 67/00

(54) **Flüssigkristalliner Cellulose (ether) ether als interferentiell wirksame, farbgebende Substanz für Effektlacke bzw. Effektlackierung, insbesondere für Fahrzeugkarosserien**
Liquid cristalline etherified cellulose ether as interference pigment active coloring substance for effect lacquer e.g. lacquering, in particular for car bodies
Cristal liquide d'éther de cellulose étherifié, pigment interférentiel actif comme colorant pour laques à effets, laquage, en particulier de carrosseries de véhicules automobiles

(30) Priorität: 27.11.1995 DE 19544091
(43) Veröffentlichungstag der Anmeldung: 28.05.1997
(73) Patentinhaber: DaimlerChrysler AG, 70567 Stuttgart (DE)
(72) Erfinder: Kirschbaum, Martin, 89075 Ulm (DE); Sailer, Maria-Theresia, Dr., 89073 Ulm (DE); Dannenhauer, Fritz, Dr., 79686 Hasel (DE); Seliger, Hartmut, Prof.Dr., 89275 Elchingen (DE)

(56) Entgegenhaltungen:
- DE-A- 4 240 743
- DE-A- 4 418 075
- DE-A- 4 418 076
- DATABASE WPI Derwent Publications Ltd., London, GB; AN 87-089962 XP002026105 & JP 62 039 686 A (DAICEL CHEM.IND.KK) , 20.Februar 1987
- MOLECULAR CRYSTALS AND LIQUID CRYSTALS (INC. NONLINEAR OPTICS ), Bd. 172, Juli 1989, Seiten 17-25, XP000050349 YAMAGISHI T ET AL: "THERMOTROPIC CELLULOSE DERIVATIVES WITH FLEXIBLE SUBSTITUENTS. I PREPARATION OF TRI-O-(SS-METHOXYETHOXY)ETHYL CELLULOSE AND ITS CHOLESTERIC MESOPHASE PROPERTIES"

## Beschreibung

Die Erfindung betrifft flüssigkristalline Polymere als interferentiell wirksame, farbgebende Substanz für Lacke nach dem Oberbegriff von Anspruch 1, Interferenzpigmente auf dieser Basis nach dem Oberbegriff von Anspruch 6 sowie ein Verfahren zum Herstellen von Interferenzpigmenten nach dem Oberbegriff von Anspruch 9.

In dem Bemühen um brillantere Farbeindrücke insbesondere bei Fahrzeugkarosserien hat man die sog. Effektlacke entwickelt. Die EP 383 376 A1 beschreibt einen Effektlack mit einem deutlichen Farbumschlag bei Änderung des Betrachtungswinkel, bei dem kleine Plättchen allseits gleichmäßig mit einem vernetzten, flüssigkristallinen Polymer (LCP) in chiral-nematischer Anordnung beschichtet sind. Die Farberscheinung derartiger Pigmente kommt durch eine Interferenzerscheinung zustande. Es werden nur diejenigen Lichtwellen des einfallenden Lichtes reflektiert, deren Wellenlänge mit den äquidistanten Netzebenenabständen der flüssigkristallinen Polymere interferieren, wogegen die Lichtanteile anderer Wellenlängen durch den durchsichtigen Lack-Körper hindurchgehen und von dem - vorzugsweise - dunklen Kern des Interferenzpigmentes, nämlich das Plättchen oder durch den dunklen Untergrund der Effektlackierung absorbiert werden. Derartige, plättchenförmige, parallel zur lackierten Oberfläche ausgerichtete Interferenzpigmente haben bei orthogonaler Betrachtung eine bestimmte erste Farbe - Basisfarbe - und unter einer geneigten Betrachtungsrichtung eine zweite, kürzerwellige Farbe. Diese vom Betrachtungswinkel abhängige Farberscheinung der lackierten Oberfläche macht die Lackierung sehr effektvoll und für bestimmte Anwendungsfälle, bei denen derartige Farbeffekte vom Kunden positiv aufgenommen werden, sehr wünschenswert. Nachteilig ist die aufwendige Herstellung der mehrschalig gestalteten Interferenzpigmente, wodurch sich der Effektlack und dementsprechend die Effektlackierung auf dem Gebrauchsgegenstand recht kostspielig gestalten.

Die DE 42 40 743 A1 beschreibt die Herstellung von Interferenzpigmenten auf der Basis von Polysiloxanen, wobei diese jeweils als Ganzes aus kleinen Bruchstücken einer dünnen vernetzten Folie aus flüssigkristallinen Polymeren bestehen. Diese Interferenzpigmente sind farblos und klar durchsichtig. Die mit ihnen erzielbare Farbwirkung beruht auf der regelmäßigen Struktur und der gleichmäßigen Anordnung der Moleküle in Form eines Flüssigkristalls und auf einer darauf zurückzuführenden Interferenz eines bestimmten spektralen Lichtanteiles, für den das Pigment reflektiv wirkt. Die anderen Lichtanteile gehen durch das Pigment hindurch. Dadurch lassen sich verblüffende Farbeffekte unterschiedlicher Art erzielen, je nach Ausgestaltung der Lackierung bzw. der Interferenzpigmente und deren Mischung. Die Polysiloxane, die für diese bekannten flüssigkristallinen Polymere verwendet werden, haben den Nachteil, daß sie in mehreren Stufen und aus teuren Ausgangsstoffen synthetisiert werden müssen. Die Interferenzpigmente der angesprochenen Art werden hergestellt, indem die Polymere aus dem flüssigen oder flüssigkristallinen Zustand heraus auf eine glatte Unterlage, beispielsweise auf eine polierte Walze aufgerakelt werden, wodurch ein dünner Film gebildet wird. Durch den Rakelvorgang kommt es zu einer Ausrichtung der Moleküle innerhalb des Filmes, nämlich zu einer homogenen Orientierung; erst nach diesem Ausrichten weist der Film eine Interferenzfarbe auf. Beim Schervorgang der flüssigkristallinen Polymere stellen sich während des Rakelns selbsttätig äquidistante Netzebenen und damit farbselektiv wirkende Beugungsstrukturen ein.

Die DE 43 07 769 A1 beschreibt ein Verfahren zum Herstellen eines Überzuges aus Materialien mit guten nichtlinearen optischen Eigenschaften auf Substraten der Mikroelektronik (optische Schalter, Frequenzverdoppler) wobei ein flüssigkristallines Polymer unterhalb seiner Glastemperatur gleichzeitig einem elektrischen Feld und einer bestimmten Lichteinwirkung ausgesetzt wird. Die unter Einwirkung von Licht und elektrischem Feld bewirkte frequenzverdoppelnde Eigenschaft des Polymers bleibt nach einer sich nach Tagen bemessenden Behandlung des flüssigkristallinen Polymers auch nach dem Abschalten des Feldes und des Lichtes stabil erhalten. Neben bevorzugten cyclischen Polysiloxanen mit cholesterischen Eigenschaften werden auch noch Polymethacrylate, Polyacrylate, Polyvinylverbindungen, Polyether und Polyester als mögliche Ausgangsmaterialien genannt. Diese dem Sachgebiet der Mikroelektronik und der Lichtleittechnik zuzuordnende Literaturstelle vermittelt jedoch dem vorliegend einschlägigen Fachmann der Lack- und Pigmentchemie keine Anregungen zur Gestaltung neuer interferentieller Effektlacke.

Eine Bedingung für das Auftreten von flüssigkristallinen Phasen ist eine starre mesogene Molekülgestalt. Die Repetitionseinheiten flüssigkristalliner Polymere enthalten die mesogenen Einheiten. Die beiden am häufigsten realisierten Molekülstrukturen sind die Seitenketten-LC-Polymere, bei denen die mesogenen Einheiten als Seitenketten des Polymerrückgrates chemisch fixiert sind, und die Hauptketten-LC-Polymere, bei denen die mesogenen Einheiten das Polymerrückgrat oder Teil des Polymerrückgrates bilden. Neben den Homopolymeren sind eine Vielzahl von Copolymeren darstellbar, die verschiedene mesogene Einheiten enthalten können.

In einer älteren Patentanmeldung (P 44 18 076.4-13) der Anmelderin wurde als flüssigkristallines Hauptketten-Polymer ein veresterter Celluloseether oder eine Mischung verschieder Polymere dieser Art vorgeschlagen. Diese Stoffauswahl war dadurch begründet, daß die stoffliche Basis dieser Polymere leicht verfügbar und preiswert ist. Aus den hergestellten flüssigkristallinen Polymeren wird zunächst durch Aufrakeln auf eine glatte Unterlage ein dünner Film gebildet, dann der Polymerfilm venetzt, der Film abgenommen und dieser zu Interferenzpigmenten zerkleinert. Die Interferenzpigmente werden dann in ein Harz als Lackkörper eingemischt. Die veresterten Celluloseether sind bei längerer Einwirkung von aggressiven Medien wie Laugen oder Säuren chemisch nicht genügend beständig.

Aufgabe der Erfindung ist es, ein flüssigkristallines Polymer anzugeben, welches bezüglich seiner stofflichen Basis zwar ebenfalls preiswert und leicht verfügbar ist, welches jedoch im Unterschied zu den Cellulose(ether)estern eine bessere chemische Beständigkeit aufweist.

Diese Aufgabe wird bezüglich des Polymers selber erfindungsgemäß durch die kennzeichnenden Merkmale von Anspruch 1 gelöst. Zweckmäßige Ausgestaltungen der Erfindung können den Unteransprüchen entnommen werden.

Im Unterschied zu den vernetzbaren Cellulose(ether)estern gemäß dem älteren Vorschlag werden erfindungsgemäß vernetzbare Cellulose(ether)ether verwendet. Während die Cellulose(ether)ester durch Veresterung kommerziell erhältlicher Celluloseether, wie z.B. *O*-Hydroxypropylcellulose oder O-Hydroxyethylcellulose, hergestellt werden, erhält man die Cellulose(ether)ether durch Veretherung der gleichen Celluloseether. Der Vorteil gegenüber den älteren Cellulose(ether)estern liegt darin, daß der chemisch andersartige Aufbau aus Ether-Bindungen zu einer besseren chemischen Beständigkeit im Vergleich zu den Cellulose(ether)estern führt.

In den beigefügten Zeichnungen sind verschieden Strukturformeln von Ausgangsstoffen, Zwischenprodukten und einem letztlich erzeugten flüssigkristallinen Polymer dargestellt; und zwar zeigen
- Fig. 1: die Molekülstruktur der Cellulose und der darin eingebundenen Gruppe der Anhydroglycose [AHG],
- Fig. 2: die Molekülstruktur eines als Edukt einsetzbaren, ersten Celluloseethers, und zwar der Hydroxypropylcellulose,
- Fig. 3: die Molekülstruktur eines anderen, ebenfalls als Edukt einsetbaren Celluloseethers, und zwar der Hydroxyethylcellulose,
- Fig. 4: die Molekülstruktur des aus der Hydroxypropylcellulose (Figur 2) gewonnenen Allylethers, eines erfindungsgemäßen Cellulose(ether)ethers und
- Fig. 5: die Molekülstruktur des aus der Hydroxyethylcellulose (Figur 3) gewonnenen Allylethers, eines anderen erfindungsgemäßen Cellulose(ether)ethers.

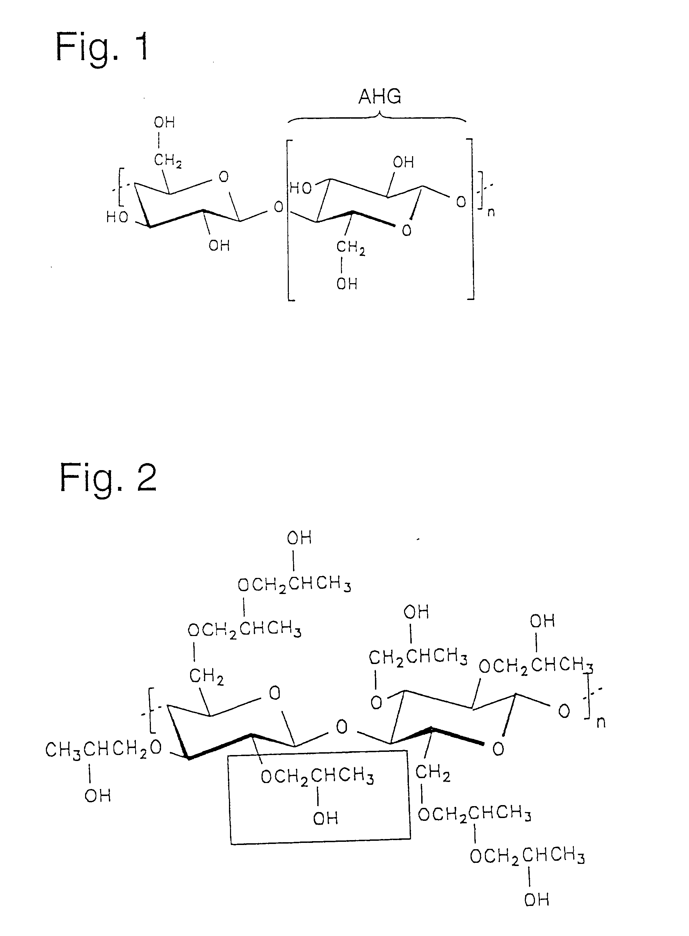

Das eingesetzte Polymer besteht aus einem Polymer-Gerüst aus Anhydroglucose-Einheiten (AHG-Einheiten, siehe auch Figur 1), an welches über die OH-Gruppen Seitenketten geknüpft sind, und zwar maximal drei Seitenketten, die ihrerseits aus Hydroxypropyl- oder Hydroxyethyl-Resten bestehen. Die Länge der Seitenketten braucht nicht einheitlich zu sein, es können unterschiedliche Hydroxypropyl- bzw. Hydroxyethyl-Gruppen vorhanden sein. Entscheidend für die Zwecke der vorliegenden Erfindung ist u.a. der Veretherungsgrad n, eine statistischen Größe, die zwischen zwei und sieben liegen sollte. Dieses Ausgangspolymer wird mit ungesättigten (Alkenyl-)Bromiden umgesetzt; dies ist ebenfalls eine statistische Reaktion, dergestalt, daß nicht alle OH-Gruppen der Hydroxypropyl- bzw. Hydroxyethyl-Gruppen umgesetzt werden. Auch hierbei ist für die Zwecke der vorliegenden Erfindung u.a. die Größe des Veretherungsgrades q entscheidend, der bei etwa 1,5 bis 3 liegen sollte.

Die erfindungsgemäßen Cellulose(ether)ether können in Form von Interferenzpigmenten gemäß Anspruch 6, die als Zwischenprodukt im Handel auftreten können, zur Herstellung von Lacken für die Lackierung von Erzeugnissen mit optisch anspruchsvollem Aussehen, insbesondere von Automobilen angewendet werden. Das Verfahren zur Herstellung der Interferenzpigmente behandelt Anspruch 9; zweckmäßige Ausgestaltungen dazu sind in den davon abhängigen Ansprüchen 10 und 11 erwähnt. Für die mit erfindungsgemäßen Interferenzpigmenten hergestellten Lacke zum einen und für die auf Gebrauchsgegenständen applizierte Lackierung zum anderen, die beide selbständig als Zwischenprodukte im Handel auftreten können, wird in Anspruch 12 (Effektlack) bzw. in Anspruch 14 (applizierte Lackierung) Schutz begehrt. Es sei in diesem Zusammenhang der Vollständigkeit erwähnt, daß es durchaus Sinn machen kann, außer den genannten Interferenzpigmenten auch noch Absorptionspigmente ohne Farbflop in den Lack einzumischen. Und zwar kann dies zum einen zur Erzeugung bestimmter Mischfarben zweckmäßig sein, und zwar dann, wenn die Farbe der Absorptionspigmente von einer der beiden interferentiell hervorgerufenen Farben der Interferenzpigmente abweicht. Zum anderen kann eine der beiden Interferenzfarben durch Zumischen von Absorptionspigmenten in ihrer Brillanz intensiviert werden, indem Absorptionspigmente der gleichen Farbe wie die betreffende Interferenzfarbe verwendet werden.

Es ist auch möglich, die erfindungsgemäßen Polymere in flüssiger Form in einen Lack als Lackkörper einzubringen, wobei die interferentielle Farbwirkung durch den in soweit farbwirksamen Lack-körper selber dadurch erreicht wird, daß die Hauptgruppen-Mesogene des flüssigkristallinen Polymers bei der Lackapplikation sich zumindest näherungsweise chiral-nematisch anordnen. Bei dieser Art der Verwendung muß das flüssigkristalline Polymer nach der Lack-Applikation auf dem lackierten Werkstück vernetzt werden. Für die mit erfindungsgemäßen flüssigkristallinen Polymeren hergestellten Lacke zum einen und für die auf Gebrauchsgegenständen applizierte Lackierung zum anderen wird in Anspruch 13 (Effektlack) bzw. in Anspruch 15 (applizierte Lackierung) Schutz begehrt. Auch bei diesen Lacken bzw. Lackierungen ist es denkbar und u.U. sinnvoll, Pigmente gleicher oder unterschiedlicher Farbe und Interferenzpigmente und/oder Absorptionspigmente dem verwendeten Lack zuzumischen. Hier gelten die gleichen Überlegungen, wie sie weiter oben im Zusammenhang mit den Interferenzpigment-Lacken erwähnt wurden

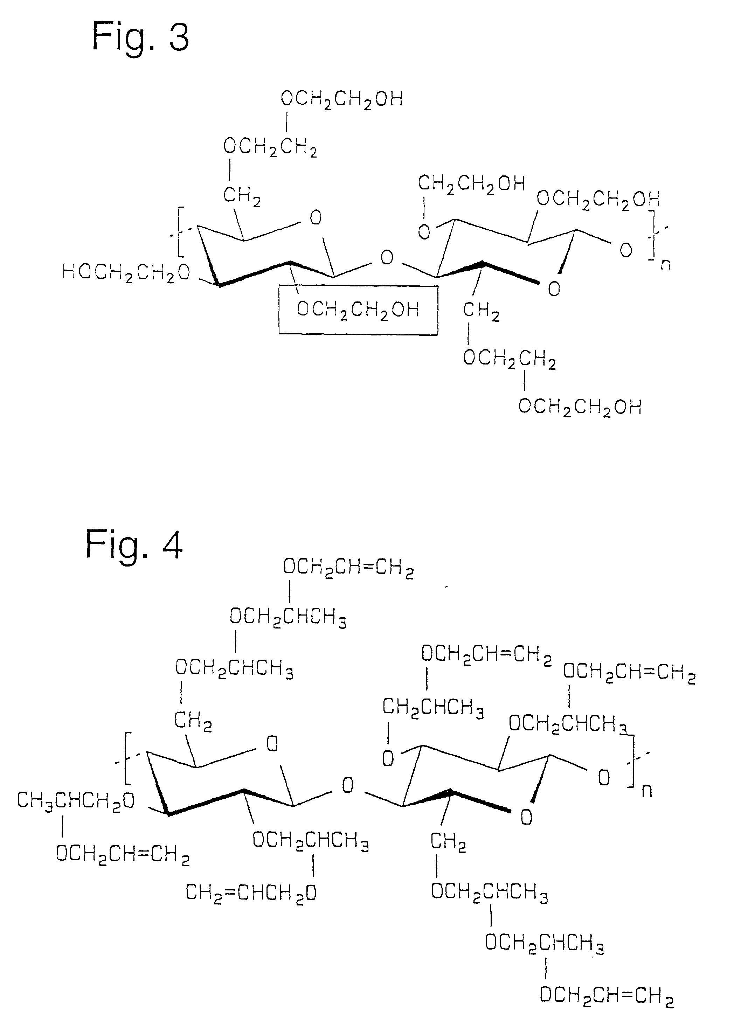

Ein erfindungsgemäßer Cellulose(ether)ether kann beispielsweise der *O*-(2-Hydroxypropylcellulose)-allylether gemäß der in Figur 4 dargestellten Strukturformel sein. Dieses Produkt kann nach folgender Vorgehensweise gewonnen werden:

Zu einer Lösung von 4 g handelsüblicher *O*-Hydroxypropylcellulose - Strukturformel siehe Figur 2 - in einem Gemisch von 70 ml Dimethylsulfoxid und 30 ml Tetramethylharnstoff wird eine Lösung von 11,2 g Kalium-tert.-butanolat in 60 ml tert.-Butanol gegeben. Unter Wasserkühlung tropft man nun innerhalb von 2 Stunden 20 ml Allylbromid zu. Nach 12 Stunden Rühren gibt man 10 ml Eisessig sowie 150 ml Wasser zu. Nach Abdekantieren vom abgeschiedenen Produkt wird dies in 100 ml Aceton aufgenommen und mit 300 ml Wasser wieder ausgefällt. Dieser Reinigungsschritt wird noch zwei mal wiederholt. Das gereinigte Produkt wird im Vakuum getrocknet. Die Ausbeute beträgt 3.5 g eines leicht gelblichen, zähen Polymers, welches in Aceton, Toluol, Chloroform löslich ist.

Von dem nach dem eben beschriebenen Verfahren erhältlichen Polymer wird eine 25-proz. Lösung in Toluol hergestellt und mit 3 Gew.-% Darocur 4265, einem Photoinitiator der Firma Ciba Geigy, Basel, versetzt (die %-Angabe von Darocur ist auf die Einwaage an Polymer bezogen). Diese Lösung wird auf Glas aufgetropft. Die hergestellten Filme werden nach Verdampfen des Lösungsmittels bei unterschiedlichen Temperaturen 15 Minuten lang erwärmt, wobei die Höhe der Behandlungstemperatur ursächlich für die interferentielle Farbwirkung ist. Die bei der Wärmebehandlung jeweils gebildete chiral-nematische Phase wird im unmittelbaren Anschluß durch Belichten mit UV-Licht bei den entsprechenden Temperaturen stabilisiert, d.h. der Film vernetzt. Nachfolgend sind drei verschiedene Behandlungstemperaturen des flüssigkristallinen Polymers und die dadurch erreichbare interferentielle Farbwirkung in Form der Wellenänge des reflektierten Lichtes angegeben: Behandlung bei 130°C: Reflexionswellenlänge λₘₐₓ = 450 nm,
bei 145°C: λₘₐₓ = 500 nm und
bei 150°C: λₘₐₓ = 550 nm.

Aus ein und demselben flüssigkristallinen, erfindungsgemäßen Polymer können also, lediglich durch Variation der Behandlungstemperatur vor der Vernetzung des Polymerfilmes, Interferenzpigmente aller Farben des Spektrums hergestellt werden. Mischfarben können durch Mischen von Interferenzpigmenten unterschiedlicher Farbe dargestellt werden, wobei die unterschiedlichen Interferenzpigmente als lose Partikel gemischt und aus dem Pigmentgemisch ein Lack hergestellt werden kann. Stattdessen können auch zunächst fertige Lacke mit jeweils einfarbigen Interferenzpigmenten entsprechend einem Farbfächer der Regenbogenfarben hergestellt und Mischfarben durch Mischen der Lacke erzeugt werden.

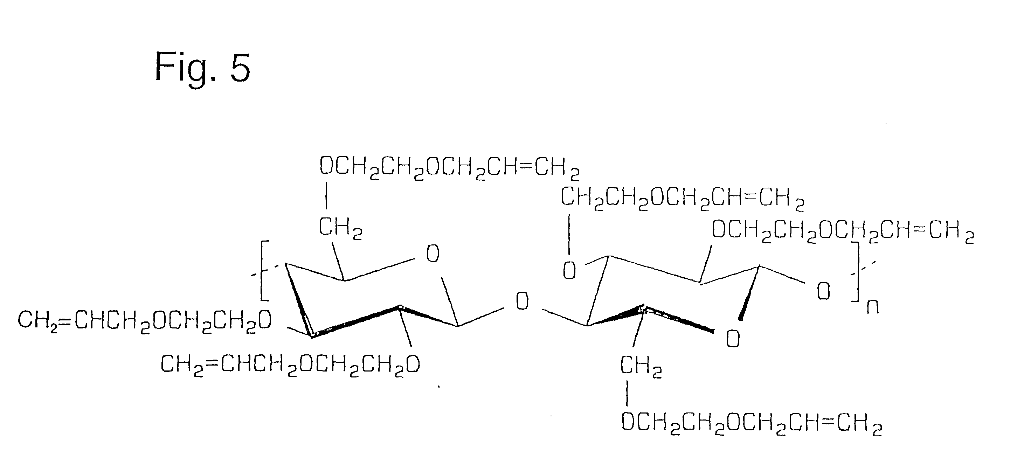

In ähnlicher Weise wie beschrieben kann auch aus einer im Handel erhältlichen Hydroxyethylcellulose, dessen Strukturformel in Figur 3 dargestellt ist, ein flüssigkristallinies Polymer, nämlich ein Allylether der Hydroxyethylcellulose synthetisiert werden, dessen Strukturformel in Figur 5 dargestellt ist.

## Patentansprüche

1. Flüssigkristallines, photovernetztbares Hauptketten-Polymeren als interferentiell wirksame, farbgebende Substanz für farbige Lacke, in denen die Hauptgruppen-Mesogene zumindest näherungsweise chiral-nematisch geordnet sind,
**gekennzeichnet durch**
einen veretherten Cellulose(ether) oder eine Mischung mehrerer veretherter Cellulose(ether) als flüssigkristallines Hauptketten-Polymer bzw. Polymere mit folgenden Merkmalen:
▷ die verwendeten Celluloseether besitzen eine Molmasse von 500 bis 1 000 000,
▷ die Anhydroglucose-Einheiten der verwendeten Cellulosether sind mit einem durchschnittlichen molaren Substitutionsgrad von 2 bis 7 mit Propylenoxid- oder Ethylenoxid-Einheiten (C₃H₆O- oder C₂H₄O-Einheiten) verethert,
▷ die verwendeten Cellulosether sind mit einem durchschnittlichen molaren Substitutionsgrad von 1,5 bis 3 mit ungesättigten Kohlenwasserstoff-Resten (CᵣH₂ᵣ₋₁) verethert, mit r = 2 bis 15.

2. Polymer nach Anspruch 1,
**dadurch gekennzeichnet,**
**daß** die als Edukte verwendeten Celluloseether in Seitenketten 2 bis 15 Kohlenstoff-Atome enthalten.

3. Polymer nach Anspruch 1,
**dadurch gekennzeichnet,**
**daß** die Celluloseether zusätzlich mit ungesättigten Alkenyl-Resten verethert sind.

4. Polymer nach Anspruch 1,
**dadurch gekennzeichnet,**
**daß** beim Herstellen eines Cellulose(ether)ethers unter Verwendung von Propylenoxid-Einheiten (C₃H₆O-Einheiten) als Edukt Hydroxypropylcellulose der folgenden allgemeinen Formel
[AHG(C₃H₆O)ₙH₃]ₘ
eingesetzt wird, die zu einem Produkt der folgenden allgemeinen Formel
[AHG(C₃H₆O)ₙHₚY_{q}]ₘ
verethert wird, mit AHG = Anhydroglucose-Einheit, Y = CᵣH₂ᵣ₋₁, n = 2 bis 7, m = 5 bis 2500, p = 3 - q, q = 1 bis 3 und r = 2 bis 15.

5. Polymer nach Anspruch 1,
**dadurch gekennzeichnet,**
**daß** beim Herstellen eines Cellulose(ether)ethers unter Verwendung von Ethylenoxid-Einheiten (C₂H₄O-Einheiten) als Edukt Hydroxypropylcellulose der folgenden allgemeinen Formel:
[AHG(C₂H₄O)ₙH₃]ₘ
eingesetzt wird, die zu einem Produkt der folgenden allgemeinen Formel
[AHG (C₂H₄O)ₙHₚY_{q}]ₘ
verethert wird, mit AHG = Anhydroglucose-Einheit, Y = CᵣH₂ᵣ₋₁, n = 2 bis 7, m = 5 bis 2500, p = 3 - q, q = 1 bis 3 und r = 2 bis 15.

6. Interferenzpigment oder interferentiell farbwirksamer Lack-körper aus flüssigkristallinen, vernetzten Hauptketten-Polymeren für farbige Lacke, in denen die Hauptgruppen-Mesogene zumindest näherungsweise chiral-nematisch geordnet sind,
**gekennzeichnet durch**
einen veretherten Cellulose(ether) oder eine Mischung mehrerer veretherter Cellulose(ether) als flüssigkristallines Hauptketten-Polymer bzw. Polymere mit folgenden Merkmalen:
▷ die verwendeten Celluloseether besitzen eine Molmasse von 500 bis 1 000 000,
▷ die Anhydroglucose-Einheiten der verwendeten Cellulosether sind mit einem durchschnittlichen molaren Substitutionsgrad von 2 bis 7 mit Propylenoxid- oder Ethylenoxid-Einheiten (C₃H₆O- oder C₂H₄O-Einheiten) verethert,
▷ die verwendeten Cellulosether sind mit einem durchschnittlichen molaren Substitutionsgrad von 1,5 bis 3 mit ungesättigten Kohlenwasserstoff-Resten (CᵣH₂ᵣ₋₁) verethert, mit r = 2 bis 15.

7. Interferenzpigment nach Anspruch 1,
**dadurch gekennzeichnet,**
**daß** Dicke der Interferenzpigmente 5 bis 50 *µ*m beträgt.

8. Polymer nach Anspruch 1,
**dadurch gekennzeichnet,**
**daß** Durchmesser der Interferenzpigmente 5 bis 100 *µ*m beträgt.

9. Verfahren zum Herstellen von plättchenförmigen Interferenzpigmenten, insbesondere für solche nach Anspruch 6, bei dem durch Aufbringen von flüssigkristallinen Hauptketten-Polymeren (LCP) in flüssigem Zustand auf einer glatten Unterlage ein Film mit zumindest näherungsweise chiral-nematisch geordneten Molekülen erzeugt wird, bei dem dieser Film ausgehärtet, von der Unterlage abgezogen und in plättchenförmige Partikel zerkleinert wird, wobei vor Weiterverarbeitung der Partikel als Interferenzpigmente zu große und zu kleine Partikel durch ein korngrößenselektives Trennverfahren aussortiert werden,
**gekennzeichnet durch**
daß der Film aus einem flüssigkristallinen Cellulose(ether)ether oder einem Gemisch verschiedener Cellulose(ether)ether mit folgenden Merkmalen erzeugt wird:
▷ die verwendeten Celluloseether besitzen eine Molmasse von 500 bis 1 000 000,
▷ die Anhydroglucose-Einheiten der verwendeten Cellulosether sind mit einem durchschnittlichen molaren Substitutionsgrad von 2 bis 7 mit Propylenoxid- oder Ethylenoxid-Einheiten (C₃H₆O- oder C₂H₄O-Einheiten) verethert,
▷ die verwendeten Cellulosether sind mit einem durchschnittlichen molaren Substitutionsgrad von 1,5 bis 3 mit ungesättigten Kohlenwasserstoff-Resten (CᵣH₂ᵣ₋₁) verethert, mit r = 2 bis 15.

10. Verfahren nach Anspruch 9,
**dadurch gekennzeichnet,**
**daß** in dem Film in noch unvernetztem Zustand die Ganghöhe der Helix der chiral-nematischen Anordnung der Moleküle und somit der Netzebenenabstand in dem Film durch eine Temperierung des Filmes derart beeinflußt wird, daß der Netzebenenabstand der Wellenlänge der gewünschten Interferenzfarbe entspricht.

11. Verfahren nach Anspruch 9,
**dadurch gekennzeichnet,**
**daß** zum Temperieren des Filmes in noch unvernetztem Zustand dieser auf eine gleichbleibende Temperatur im Bereich von 120 bis 160°C währen einer Zeitspanne von 5 bis 30 Minuten, vorzugsweise etwa 15 Minuten lang erwärmt wird und daß anschließend das den Film bildende flüssigkristalline Polymer aus der Behandlungswärme heraus durch UV-Licht-Bestrahlung vernetzt wird.

12. Effektlack zum Lackieren von Gebrauchsgegenständen, insbesondere von Fahrzeugkarosserien, bei dem die Farbwirkung durch in einem Lackkörper dispergierte plättchenförmige, bei der Lack-Applikation sich selbsttätig etwa parallel zur Gegenstandsoberfläche ausrichtende Interferenzpigmente aus flüssigkristallinen Hauptketten-Polymeren (LCP) erzeugt wird,
**gekennzeichnet durch** Interferenzpigmente nach einem der Ansprüche 6 bis 8.

13. Effektlack zum Lackieren von Gebrauchsgegenständen, bei dem die Farbwirkung durch den interferentiell farbwirksamen Lackkörper selber erreicht wird, der durch ein flüssigkristallines Hauptketten-Polymer (LCP) oder ein Gemisch solcher Polymere gebildet ist, in denen die Hauptgruppen-Mesogene bei der Lackapplikation sich zumindest näherungsweise chiral-nematisch anordnen,
**gekennzeichnet durch** eine Verwendung von flüssigkristallinen Hauptketten-Polymere für den interferentiell farbwirksamen Lackkörper nach einem der Ansprüche 1 bis 5.

14. Auf einem Gebrauchsgegenstand, insbesondere einer Fahrzeugkarosserie applizierte Lackierung, bei dem die Farbwirkung durch in einem Lackkörper dispergierte plättchenförmige, bei der Lack-Applikation sich selbsttätig etwa parallel zur Gegenstandsoberfläche ausrichtende Interferenzpigmente aus flüssigkristallinen Hauptketten-Polymeren (LCP) erzeugt wird,
**gekennzeichnet durch** Interferenzpigmente nach einem der Ansprüche 6 bis 8.

15. Auf einem Gebrauchsgegenstand applizierte Lackierung, bei dem die Farbwirkung durch den interferentiell farbwirksamen Lackkörper selber erreicht wird, der durch ein flüssigkristallines Hauptketten-Polymer (LCP) oder ein Gemisch solcher Polymere gebildet ist, in denen die Hauptgruppen-Mesogene bei der Lack-applikation sich zumindest näherungsweise chiral-nematisch anordnen,
**gekennzeichnet durch** eine Verwendung von flüssigkristallinen Hauptketten-Polymere für den interferentiell farbwirksamen Lackkörper nach einem der Ansprüche 1 bis 5.

## Claims

1. Liquid crystalline, photo-crosslinkable main-chain polymers as an interferentially acting, colour-imparting substance for coloured paints, in which the main groups-mesogens are at least approximately chirally-nematically arranged,
**charactarised by**
an etherified cellulose (ether) or a mixture of several etherified cellulose (ethers) as a liquid crystalline main-chain polymer or polymers, having the following characteristics:
- the cellulose ethers used have a molecular weight of from 500 to 1 000 000,
- the anhydroglucose units of the cellulose ethers used are etherified to an average degree of molar substitution of 2 to 7 with propylene oxide or ethylene oxide units (C₃H₆O or C₂H₄O units),
- the cellulose ethers used are etherified to an average degree of molecular substitution of 1.5 to 3 with unsaturated hydrocarbon residues (CᵣH₂ᵣ₋₁), where r = 2 co 15.

2. Polymer as claimed in claim 1,
**characterised in that**
the cellulose ethers used as bases contain 2 to 15 carbon atoms in side chains.

3. Polymer as claimed in claim 1,
**characterised in that**
the cellulose ethers are additionally etherified with unsaturated alkenyl residues.

4. Polymer as claimed in claim 1,
**characterised in that**
when producing a cellulose(ether) ether using propylene oxide units (C₃H₆O units) as a base, hydroxypropyl cellulose having the following general formula
[AHG(C₃H₆O)ₙH₃]ₘ
is used, which is etherified to a product having the general formula
[AHG (C₃H₆O)ₙHₚY_{q}]ₘ
where AHG = anhydroglucose unit, Y = CᵣH₂ᵣ₋₁, n = 2 to 7, m = 5 to 2500, p = 3 - q, q = 1 to 3 and r = 2 to 15.

5. Polymer as claimed in claim 1,
**characterised in that**
when producing a cellulose(ether) ether using ethylene oxide units (C₂H₄O units) as a base, hydroxypropyl cellulose having the following general formula
[AHG(C₂H₄O)ₙH₃)ₘ
is used, which is etherified to a product having the following general formula
[AHG(C₂H₄O)ₙHₚY_{q}]ₘ
where AHG = anhydroglucose unit, Y = CᵣH₂ᵣ₋₁, n = 2 to 7, m = 5 to 2500, p = 3 - q, q = 1 to 3 and r = 2 to 15.

6. Interference pigment or paint body with an interferential colour effect comprising liquid crystalline, cross-linked main-chain polymers for coloured paints, in which the main groups-mesogens are at least approximately chirally-nematically arranged,
**charactarised by**
an etherified cellulose (ether) or a mixture of several etherified cellulose (ethers) as the liquid crystalline main-chain polymer or polymers, having the following characteristics:
- the cellulose ethers used have a molecular weight of from 500 to 1 000 000,
- the anhydroglucose units of the cellulose ethers used are etherified to an average degree of molar substitution of 2 to 7 with propylene oxide or ethylene oxide units (C₃H₆O or C₂H₄O units),
- the cellulose ethers used are etherified to an average degree of molecular substitution of 1.5 to 3 with unsaturated hydrocarbon residues (CᵣH₂ᵣ₋₁), where r = 2 to 15.

7. Interference pigment as claimed in claim 1,
**charactarised in that**
the thickness of the interference pigments is 5 to 50 *µ*m.

8. Polymer as claimed in claim 1,
**characterised in that**
the diameter of the interference pigments is 5 to 100 *µ*m.

9. Method of producing platelet-shaped interference pigments, in particular those as claimed in claim 6, whereby a film of at least approximately chirally-nematically arranged molecules is produced by applying liquid crystalline main-chain polymers (LCP) in a liquid state to a smooth substrate, this film is cured, removed from the substrate and fractured into platelet-shaped particles, the particles being further processed as interference pigments by sorting into large and small particles by a grain-size selective separation process,
**characterised in that**
the film is produced from a liquid crystalline cellulose(ether) ether or a mixture of different cellulose(ether) ethers having the following characteristics:
- the cellulose ethers used have a molecular weight of from 500 to 1 000 000,
- the anhydroglucose units of the cellulose ethers used are etherified to an average degree of molar substitution of 2 to 7 with propylene oxide or ethylene oxide units (C₃H₆O or C₂H₄O units),
- the cellulose ethers used are etherified to an average degree of molecular substitution of 1.5 to 3 with unsaturated hydrocarbon residues (CᵣH₂ᵣ₋₁), where r = 2 to 15.

10. Method as claimed in claim 9,
**characterised in that**
when the film is in the as yet non-cross-linked state, the pitch height of the helix of the chiral-nematic arrangement of the molecules and hence the lattice plane spacing in the film is acted on by heating the film in such a way that the lattice plane spacing corresponds to the wavelength of the desired interference colour.

11. Method as claimed in claim 9,
**characterised in that**
in order to heat the film in the as yet non-cross-linked state, the latter is heated at a constant temperature in the range of from 120 to 160°C for a period of from 5 to 30 minutes, preferably approximately 15 minutes, and the liquid crystalline polymer forming the film is then cross-linked by the treatment heat and exposure to UV light.

12. Effect paint for painting objects of daily use, in particular the bodywork of motor vehicles, in which the colour effect is produced by platelet-shaped interference pigments of liquid crystalline main-chain polymers (LCP), dispersed in a paint body, which are automatically aligned approximately parallel with the surface of the object when the paint is applied,
**characterised by** interference pigments as claimed in one of claims 6 to 8.

13. Effect paint for painting objects of daily use, in which the colour effect is produced by interferential colour effect of the paint body itself, formed from a liquid crystalline main-chain polymer (LCP) or a mixture of such polymers, in which the main groups-mesogens form an at least approximately chiral-nematic arrangement when the paint is applied,
**characterised by** a use or liquid crystalline main-chain polymers for the paint body having an interferential colour effect as claimed in one of claims 1 to 5.

14. Paintwork applied to an object of daily use, in particular the bodywork of a motor vehicle, in which the colour effect is produced by platelet-shaped interference pigments of liquid crystalline main-chain polymers (LCP), dispersed in a paint body, which are automatically aligned approximately parallel with the surface of the object when the paint is applied,
**characterised by** interference pigments as claimed in one of claims 6 to 8.

15. Paint applied to an object of daily use, in particular the bodywork of a motor vehicle, in which the colour effect is produced by the interferential colour effect of the paint body itself, formed by a liquid crystalline main-chain polymer (LCP) or a mixture of such polymers, in which the main groups-mesogens form an at least approximately chiral-nematic arrangement when the paint is applied,
**characterised by** a use of liquid crystalline main-chain polymers for the paint body having an interferential colour effect as claimed in one of claims 1 to 5.

## Revendications

1. Polymère à chaîne principale cristallin liquide, photoréticulable comme substance colorante, ayant une action interférentielle pour les laques de couleur, dans lequel les groupes principaux mésogènes sont ordonnés au moins approximativement de façon nématique chirale, **caractérisé par** un éther cellulosique éthérifié ou un mélange de plusieurs éthers cellulosiques éthérifiés comme polymère ou polymère à chaîne principale cristallin liquide ayant les caractéristiques suivantes :
◆ les éthers cellulosiques utilisés présentent une masse molaire comprise entre 500 et 1.000.000,
◆ les unités d'anhydroglucose des éthers cellulosiques utilisés sont éthérifiés avec des unltés d'oxyde de propylène ou d'oxyde d'éthylène (unité de C₃H₆O ou C₂H₄O) avec un degré de substitution molaire moyen compris entre 2 et 7,
◆ les éthers cellulosiques utilisés sont éthérifiés avec des restes hydrocarbonés Insaturés (CᵣH₂ᵣ₋₁) avec r = 2 à 15, avec un degré de substitution molaire moyen compris entre 1,5 et 3.

2. Polymère selon la revendication 1, **caractérisé en ce que** les éthers cellulosiques utilisés comme éducte contiennent dans les chaînes latérales 2 à 15 atomes de carbone.

3. Polymère selon la revendication 1, **caractérisé en ce que** les éthers cellulosiques sont éthérifiés en plus avec des restes alcényles insaturés.

4. Polymère selon la revendication 1, **caractérisé en ce que**, pour la préparation d'un éther cellulosique éthérifié utilisant des unités d'oxyde de propylène (unité de C₃H₆O), l'on met en oeuvre comme éducte l'hydroxypropylcellulose ayant la formule générale suivante :
[AHG(C₃H₆O)ₙH₃]ₘ
que l'on éthérifie pour former un produit ayant la formule générale suivante :
[AHG(C₃H₆O)ₙHₚY_{q}]ₘ
avec AHG = unité d'anhydroglucose, Y = CᵣH₂ᵣ₋₁, n = 2 à 7, m = 5 à 2.500, p = 3 - q, q = 1 à 3 et r = 2 à 15.

5. Polymère selon la revendication 1, **caractérisé en ce que**, pour la préparation d'un éther cellulosique éthérifié utilisant des unités d'oxyde d'éthylène (unités de C₂H₄O), l'on met en oeuvre comme éducte l'hydroxypropylcellulose ayant la formule générale suivante :
[AHG(C₂H₄O)ₙH₃]ₘ
que l'on éthérifie pour former un produit ayant la formule générale suivante :
[AHG(C₂H₄O)ₙHₚY_{q}]ₘ
avec AHG = unité d'anhydroglucose, Y = CᵣH₂ᵣ₋₁, n = 2 à 7, m = 5 à 2.500, p = 3 - q, q = 1 à 3 et r = 2 à 15.

6. Pigment d'interférence ou corps de la laque actif en tant que couleur interférentielle provenant des polymères à chaîne principale cristallins liquides réticulés pour les laques de couleur, dans lesquels les groupes principaux mésogènes sont ordonnés au moins approximativement de façon nématique chirale, **caractérisé par** un éther cellulosique éthérifié ou un mélange de plusieurs éthers cellulosiques éthérifiés comme polymère ou polymères à chaîne principale cristallin liquide ayant les caractéristiques suivantes :
◆ les éthers cellulosiques utilisés présentent une masse molaire comprise entre 500 et 1.000.000,
◆ les unités d'anhydroglucose des éthers cellulosiques utilisés sont éthériflés avec des unités d'oxyde de propylène ou d'oxyde d'éthylène (unités de C₃H₆O ou C₂H₄O) avec un degré de substitution molaire moyen compris entre 2 et 7,
◆ les éthers cellulosiques utilisés sont éthérifiés avec des restes hydrocarbonés insaturés (CᵣH₂ᵣ₋₁) avec r = 2 à 15, avec un degré de substitution molaire moyen compris entre 1,5 et 3.

7. Pigment d'interférence selon la revendication 1, **caractérisé en ce que** les pigments d'interférence ont une épaisseur comprise entre 5 et 50 *µ*m.

8. Polymère selon la revendication 1, **caractérisé en ce que** les pigments d'interférence ont un diamètre compris entre 5 et 100 *µ*m.

9. Procédé pour la préparation de pigments d'interférence sous forme lamellaire, en particulier des pigments selon la revendication 6, dans lequel on produit, par application des polymères à chaîne principale cristallins liquides (LCP) à l'état liquide sur un support lisse, un film avec des molécules ordonnées au moins approximativement de façon nématique chirale, on durcit ce film, on le retire du support et on le broye pour former des particules sous forme lamellaire, les particules trop grosses et trop petites étant écartées par un procédé permettant de séparer sélectivement les grains suivant leur taille avant le traitement ultérieur des particules comme pigments d'interférence, **caractérisé en ce que** le film est produit à partir d'un éther cellulosique éthérifié cristallin liquide ou d'un mélange de différents éthers éthérifiés ayant les caractéristiques suivantes :
◆ les éthers cellulosiques utilisés présentent une masse molaire comprise entre 500 et 1.000.000,
◆ les unités d'anhydroglucose des éthers cellulosiques utilisés sont éthérifés avec des unités d'oxyde de propylène ou d'oxyde d'éthylène (unités de C₃H₆O ou C₂H₄O) avec un degré de substitution molaire moyen compris entre 2 et 7,
◆ les éthers cellulosiques utilisés sont éthérifiés avec des restes hydrocarbonés insaturés (CᵣH₂ᵣ₋₁) avec r = 2 à 15, avec un degré de substitution molaire moyen compris entre 1,5 et 3.

10. Procédé selon la revendication 9, **caractérisé en ce que** l'on influence dans le film à l'état encore non réticulé le pas de l'hélice de la disposition nématique chirale des molécules et ainsi la distance interréticulaire dans le film par un équilibrage de la température du film, de telle façon que la distance interréticulaire corresponde à la longueur d'onde de la couleur d'interférence désirée.

11. Procédé selon la revendication 9, **caractérisé en ce que**, pour l'équilibrage de la température du film à l'état encore non réticulé, l'on chauffe celui-ci à une température restant constante comprise dans un intervalle allant de 120 à 160°C pendant une durée de 5 à 10 minutes, de préférence pendant environ 15 minutes et en ce que l'on réticule ensuite le polymère cristallin liquide formant le film hors de la chaleur du traitement par irradiation UV.

12. Laque à effet spécial pour le revêtement des objets d'usage courant, en particulier des carrosseries de véhicules, dans laquelle l'effet de coloration est produit par des pigments d'interférence provenant des polymères à chaîne principale cristallins liquides (LCP), se présentant sous forme lamellaire dispersés dans le corps de la laque, s'orientant d'eux-mêmes lors de l'application de la laque à peu près parallèlement à la surface de l'objet, **caractérisée par** les pigments d'interférence selon l'une des revendications 6 à 8.

13. Laque à effet spécial pour le revêtement des objets d'usage courant dans laquelle l'effet de coloration est obtenu par le corps de la laque lui-même actif en tant que couleur interférentielle, formé par un polymère à chaîne principale cristallin liquide (LCP) ou par un mélange de ces polymères, dans lesquels, lors de l'application de la laque, les groupes principaux mésogènes se disposent au moins approximativement de façon nématique chirale, **caractérisée en ce que** l'on utilise des polymères à chaîne principale cristallins liquides pour le corps de la laque actif en tant que couleur interférentielle selon l'une des revendications 1 à 5.

14. Revêtement appliqué sur un objet d'usage courant, en particulier sur une carrosserie de véhicule, dans lequel l'effet de coloration est produit par des pigments d'interférence provenant des polymères à chaîne principale cristallins liquides (LCP), se présentant sous forme lamellaire dispersés dans le corps de la laque, s'orientant d'eux-mêmes lors de l'application de la laque à peu près parallèlement à la surface de l'objet, **caractérisé par** les pigments d'interférence selon l'une des revendications 6 à 8.

15. Revêtement appliqué sur un objet d'usage courant dans lequel l'effet de coloration est obtenu par le corps de la laque lui-même actif en tant que couleur interférentielle, formé par un polymère à chaîne principale cristallin liquide (LCP) ou par un mélange de ces polymères, dans lesquels, lors de l'application de la laque, les groupes principaux mésogènes se disposent au moins approximativement de façon nématique chirale, **caractérisé en ce que** l'on utilise des polymères à chaîne principale cristallins liquides pour le corps de la laque actif en tant que couleur interférentielle selon l'une des revendications 1 à 5,
